# EUROPÄISCHE PATENTSCHRIFT

(11) **EP 3 289 846 B1**
(45) Veröffentlichungstag und Bekanntmachung des Hinweises auf die Patenterteilung: **22.09.2021**
(21) Anmeldenummer: 17401089.2
(22) Anmeldetag: 24.08.2017
(51) Int. Cl.: A01B 63/10, B60G 21/067

(54) **LANDWIRTSCHAFTLICHE MASCHINE MIT ZENTRALER HYDRAULIKANORDNUNG**
AGRICULTURAL MACHINE WITH CENTRAL HYDRAULIC ARRANGEMENT
ENGIN AGRICOLE POURVU D'UN SYSTÈME CENTRAL HYDRAULIQUE

(30) Priorität: 01.09.2016 DE 102016116312
(43) Veröffentlichungstag der Anmeldung: 07.03.2018
(73) Patentinhaber: Amazonen-Werke H. Dreyer SE & Co. KG, 49205 Hasbergen (DE)
(72) Erfinder: Voth, Robert, 49163 Bohmte (DE); Ehlen, Volker, 49205 Hasbergen (DE); Schlüter, Jens, 32351 Stemwede (DE); Konersmann, Hendrik, 49170 Hagen a.T.W. (DE); Ahring, Gunnar, 49082 Osnabrück (DE)

(56) Entgegenhaltungen:
- DE-A1- 19 902 787
- DE-A1-102012 107 897
- DE-B4- 10 320 291
- FR-A1- 2 605 966
- US-A1- 2011 084 457

## Beschreibung

Die Erfindung betrifft eine landwirtschaftliche Maschine gemäß dem Oberbegriff des Patentanspruches 1.

Eine derartige landwirtschaftliche Maschine ist in der DE 103 20 291 B4 beschrieben. Die beschriebene landwirtschaftliche Maschine weist ein Fahrwerk auf, an welchem jedes Laufrad einzeln aufgehängt ist. Zusätzlich sind jedem Laufrad zwei Hydraulikzylinder zugeordnet. Die Hydraulikzylinder stehen über ein Hydrauliksystem in geeigneter Weise miteinander in Verbindung, sodass mittels einer Steuereinrichtung eine Niveauregulierung der landwirtschaftlichen Maschine ermöglicht wird. Dazu lässt sich mittels des Steuersystems jeder Hydraulikzylinder des Fahrwerks unabhängig ansteuern. Durch eine unabhängige Höhenverstellung jedes Laufrads lässt sich ein gewünschter Fahrwerkszustand herstellen.

Eine unabhängige Spurbreitenverstellung zusätzlich zur Höhenverstellung für jedes einzeln am Fahrwerk aufgehängte Laufrad beschreibt beispielsweise die DE 199 08 695 A1. Zur Einstellung des gewünschten Abstandes eines Laufrads von der Mitte der landwirtschaftlichen Maschine ist jedem Laufrad ein geeigneter Hydraulikzylinder zugeordnet.

Sämtliche Hydraulikzylinder der beschriebenen Fahrwerke müssen bei ausreichendem Druck mit Hydraulikflüssigkeit versorgt sein, um ihre gewünschte Funktion sicherzustellen. Dazu ist typischerweise ein zentraler Hydraulikverteiler vorgesehen, von welchem Hydraulikleitungen zu den einzelnen Hydraulikzylindern führen.

Die beschriebenen Fahrwerke weisen typischerweise eine Vielzahl beweglicher Bauteile, beispielsweise in vertikaler und/oder horizontaler Ebene bewegbare Laufradschwingen, auf. Es besteht daher der Nachteil, dass, insbesondere lange, Hydraulikleitungen durch die beweglichen Bauteile des Fahrwerks eingeklemmt und beschädigt werden. Zudem besteht, abhängig von der Position des zentralen Hydraulikverteilers auf der landwirtschaftlichen Maschine, der Nachteil, dass Hydraulikleitungen verschiedener Länge zu den Hydraulikzylindern führen und dadurch an den Hydraulikzylindern Druckunterschiede auftreten können.

Der Erfindung liegt daher die Aufgabe zugrunde, eine zentrale Hydraulikanordnung zu schaffen, welche eine Ausführung der Hydraulikleitungen in minimaler und zumindest annähernd gleicher Länge ermöglicht.

Die Aufgabe der Erfindung wird gelöst durch die kennzeichnenden Merkmale des Anspruchs 1.

Es wird auf diese Weise eine stabile Verbindung zwischen dem vorderen und dem hinteren Fahrwerksbereich geschaffen und die Stabilität des gesamten Fahrwerks signifikant erhöht.

Es ist von Vorteil, dass der zentrale, unbewegliche Fahrwerksbereich von einer Bodenplatte und/oder einem Rahmenteil gebildet wird und zumindest einen Teil des Unterbodens des Fahrwerks darstellt. Durch die Ausführung des zentralen, unbeweglichen Fahrwerksbereichs als Bodenplatte und/oder Rahmenteil wird eine besonders hohe Stabilität des zentralen, unbeweglichen Fahrwerksbereichs erreicht. Eine Verbindung zwischen dem vorderen und dem hinteren Fahrwerksbereich mittels eines derart ausgeführten zentralen, unbeweglichen Fahrwerksbereichs führt zu einer hohen Stabilität des gesamten Fahrwerks.

Der zentrale Hydraulikverteiler einer landwirtschaftlichen Maschine weist üblicherweise eine Vielzahl von Anschlüssen für Hydraulikleitungen auf. Es ist daher von Vorteil, dass der zentrale, unbewegliche Fahrwerksbereich eine Vielzahl Fixierungselemente aufweist, welche geeignet sind, Hydraulikleitungen zu fixieren. Durch eine Fixierung der Hydraulikleitungen wird die Reibung sich bewegender Hydraulikleitungen aneinander und/oder an Bauteilen der landwirtschaftlichen Maschine deutlich reduziert. Durch die Reduzierung von Reibung wird die mechanische Belastung der Hydraulikleitungen minimiert und die Lebensdauer der Leitungen erhöht. Zudem wird das Risiko von verschleißbedingten Beschädigungen der Hydraulikleitungen gesenkt.

Es ist zusätzlich von Vorteil, dass entlang des zentralen, unbeweglichen Fahrwerksbereichs geführte Hydraulikleitungen mittels geeigneter Fixierungselemente an dem zentralen, unbeweglichen Fahrwerksbereich fixiert sind. Durch diese Maßnahme wird in der beschriebenen Weise die Eigenbewegung der Hydraulikleitungen reduziert und dadurch das Risiko von Abnutzung und/oder Beschädigungen der Hydraulikleitungen gesenkt.

Ein besonderer Vorteil wird dadurch erreicht, dass mit den Anschlüssen des zentralen Hydraulikverteilers verbundene Hydraulikleitungen im Bereich ihres jeweiligen Anschlusses an dem zentralen, unbeweglichen Fahrwerksbereich fixiert sind. Durch eine Fixierung der Hydraulikleitungen am zentralen, unbeweglichen Fahrwerksbereich im Bereich ihres jeweiligen Anschlusses wird die Eigenbewegung der Hydraulikleitungen im Bereich ihres Anschlusses an den zentralen Hydraulikverteiler erheblich reduziert. Dadurch wird die von außen einwirkende Belastung auf die Anschlüsse des zentralen Hydraulikverteilers gesenkt und belastungsbedingte Beschädigungen der Anschlüsse und/oder des zentralen Hydraulikverteilers werden weitgehend reduziert.

Es ist von Vorteil, dass der vordere und/oder der hintere Fahrwerksbereich jeweils zwei Laufradschwingen umfasst, welche auf der in Fahrtrichtung linken und rechten Seite der landwirtschaftlichen Maschine angeordnet sind, wobei jede Laufradschwinge mit einem Laufrad verbunden ist. Somit wird in einfacher Weise eine Einzelaufhängung der Laufräder der landwirtschaftlichen Maschine erreicht.

Eine vorteilhafte Weiterbildung der Erfindung besteht darin, dass die jeweils zwei Laufradschwingen des vorderen und/oder hinteren Fahrwerksbereichs an einem gemeinsamen quer zur Fahrtrichtung angeordneten vorderen bzw. hinteren Querträger angelenkt sind. Eine stabile Ausführung eines Fahrwerks mit Einzelaufhängung der Laufräder wird somit bei minimalem Materialaufwand erreicht. Die vorgesehenen Querträger sind als tragende Elemente weiterer Fahrzeugaufbauten ausgebildet. Durch die Anlenkung der Laufradschwingen an einem der vorzugsweise runden Querträger sind die einzelnen Laufräder unabhängig in einfacher Weise in vertikaler Ebene beweglich gelagert, in dem sie um die Längsachse des ihnen jeweils zugeordneten Querträgers verschwenkbar sind. Durch ein Verschieben entlang der Längsachse der Querträger sind die Laufräder zudem in horizontaler Ebene quer zur Fahrtrichtung beweglich.

Bei der beschriebenen Anordnung umfasst der vordere und/oder hintere Fahrwerksbereich jeweils zumindest einen Querträger, dem linksseitig und rechtsseitig jeweils eine Laufradschwinge samt Laufrad zugeordnet ist.

Es ist vorteilhaft, dass der zentrale, unbewegliche Fahrwerksbereich die beiden Querträger verbindet. Somit wird in der bereits beschriebenen Weise eine stabile Verbindung zwischen dem in Fahrtrichtung vorderen und dem in Fahrtrichtung hinteren Fahrwerksbereich erreicht. Bei minimalem Materialaufwand wird dadurch ein stabiles Fahrwerk geschaffen.

Es ist von besonderem Vorteil, dass der zentrale, unbewegliche Fahrwerksbereich die beiden Querträger möglichst verwindungsfest miteinander verbindet. Auf diese Weise wirkt der zentrale Fahrwerksbereich im Zusammenwirken mit den Querträgern als tragendes Element für weitere Fahrzeugaufbauten. Zudem wird durch die möglichst verwindungsfeste Verbindung ein zentraler Bereich geschaffen, auf dem der zentrale Hydraulikverteiler sicher angeordnet werden kann. Die an dem derart angeordneten zentralen Hydraulikverteiler angeschlossenen Hydraulikleitungen unterliegen in der beschriebenen Weise nur minimalen Relativbewegungen bezüglich der Fahrwerksbauteile. Somit wird die mechanische Belastung der Hydraulikleitungen und/oder der Anschlüsse des zentralen Hydraulikverteilers erheblich reduziert und die Lebensdauer der Hydraulikleitungen und des zentralen Hydraulikverteilers deutlich erhöht. Zusätzlich sind die Hydraulikleitungen zwischen dem zentralen Hydraulikverteiler und den den Laufrädern zugeordneten Hydraulikzylindern in minimaler und zumindest annähernd gleicher Länge ausführbar.

Weitere Einzelheiten der Erfindung sind der Beispielsbeschreibung und den Zeichnungen zu entnehmen. Die Zeichnungen zeigen
- Fig.1: das Fahrwerk einer landwirtschaftlichen Maschine in perspektivischer Ansicht von seitlich schräg oben,
- Fig.2: das Fahrwerk einer landwirtschaftlichen Maschine in perspektivischer Ansicht von schräg hinten und
- Fig.3: das Fahrwerk einer landwirtschaftlichen Maschine in Draufsicht von oben.

Landwirtschaftliche Maschinen sind für den Arbeitseinsatz auf landwirtschaftlichen Nutzflächen vorgesehen. Landwirtschaftliche Nutzflächen sind oft uneben. Insbesondere können sie Steigungen und Gefälle aufweisen.

Zusätzlich sind landwirtschaftliche Maschinen oftmals für Arbeiten, beispielsweise Pflegearbeiten, eines bestehenden Pflanzenbestandes vorgesehen, wobei der Pflanzenbestand überfahren werden muss. Die landwirtschaftliche Maschine muss in diesem Fall auch in einem sich in einer fortgeschrittenen Wachstumsphase befindlichen Pflanzenbestand eingesetzt werden können, ohne die zu überfahrenden Pflanzen wesentlich zu beschädigen. Zu diesen Zwecken eingesetzte landwirtschaftliche Maschinen sind beispielsweise Pflanzenschutzspritzen und/oder Düngerstreuer.

Zur Bewältigung der beschriebenen Aufgaben umfasst eine landwirtschaftliche Maschine oftmals ein Fahrwerk 1, welches eine hohe Bodenfreiheit aufweist und eine Niveauregulierung, beispielsweise zum Ausgleich von Unebenheiten und/oder Hangneigungen, bietet. Zur Verwendung der landwirtschaftlichen Maschine in verschiedenen Fahrgassensystemen, deren Anlage in an sich bekannter Weise erfolgt, ist die Spurweite eines solchen Fahrwerks 1 einstellbar. Typischerweise weisen Fahrwerke der beschriebenen Art zur unabhängigen Bewegung ihrer Laufräder in vertikaler und/oder horizontaler Ebene eine Einzelradaufhängung 2 ihrer Laufräder auf.

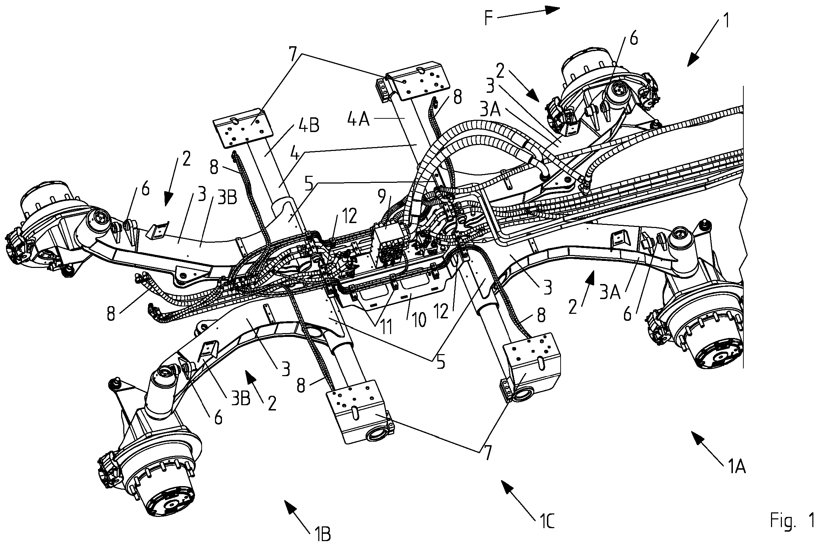

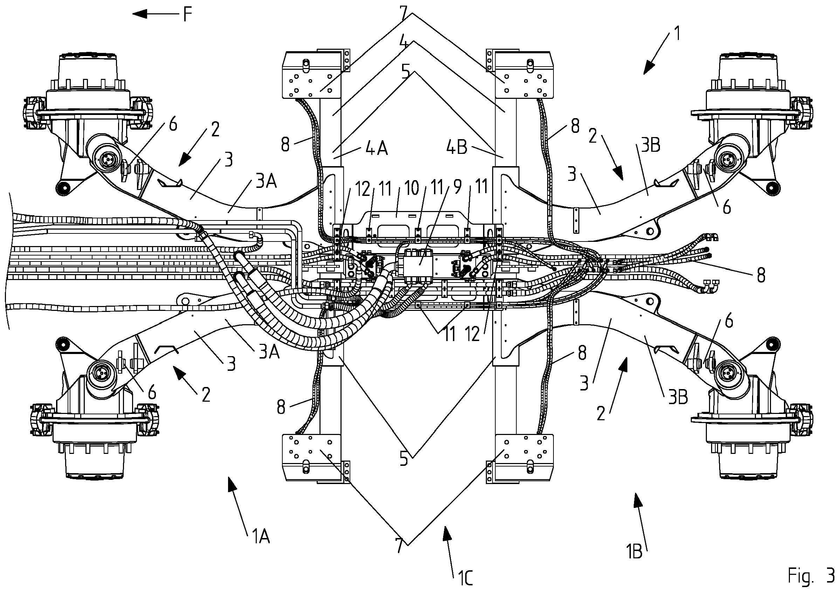

Im gewählten Ausführungsbeispiel der Fig. 1 bis 3 ist das Fahrwerk 1 einer selbstfahrenden Pflanzenschutzspritze gezeigt. Mittels dieses Fahrwerks 1 stützen sich der nicht dargestellte Rahmen und weitere nicht dargestellte Maschinenaufbauten über nicht dargestellte Laufräder auf dem Erdboden ab. Das Fahrwerk 1 ist in einen in Fahrtrichtung F vorderen 1A, einen hinteren 1B und einen den vorderen 1A mit dem hinteren 1B verbindenden zentralen 1C Fahrwerksbereich unterteilt, wie es in den Fig. 1 bis 3 gezeigt ist.

Der in Fahrtrichtung F vordere und der hintere Fahrwerksbereich umfasst jeweils eine in Fahrtrichtung F linksseitige und eine rechtsseitige Laufradschwinge 3 und einen quer zur Fahrtrichtung F angeordneten Querträger 4. Somit sind dem vorderen Querträger 4A die vorderen Laufradschwingen 3A und dem hinteren Querträger 4B die hinteren Laufradschwingen 3B gemeinsam paarweise zugeordnet.

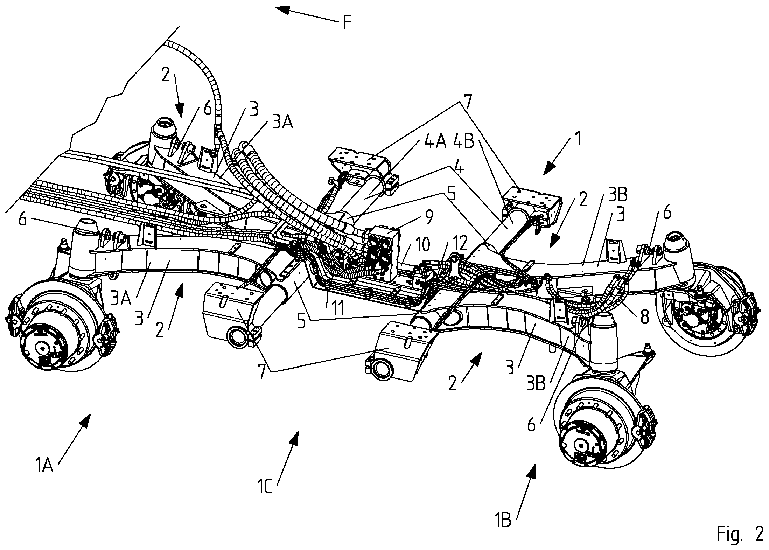

Die Einzelradaufhängung 2 der Laufräder erfolgt für jedes Laufrad mittels jeweils einer Laufradschwinge 3. Die Laufradschwinge 3 ist in horizontaler und/oder vertikaler Ebene bewegbar an dem ihr jeweils zugeordneten Querträger 4 angelenkt. Dazu ist die Laufradschwinge 3 in ihrem dem ihr jeweils zugeordneten Querträger 4 zugewandten Anlenkbereich 5 den Querträger 4 umgreifend ausgebildet, wie beispielsweise in Fig. 1 und 2 gezeigt ist.

Die Bewegung der Laufradschwinge 3 in vertikaler Ebene wird durch Verschwenken der Laufradschwinge 3 um die quer zur Fahrtrichtung F orientierte Längsachse des ihr jeweils zugeordneten Querträgers 4 erreicht.

Die Bewegung der Laufradschwinge 3 in horizontaler Ebene wird durch Verschieben der Laufradschwinge 3 entlang der quer zur Fahrtrichtung F orientierten Längsachse des ihr jeweils zugeordneten Querträgers 4 erreicht.

Zum Bewegen der Laufradschwingen 3 in horizontaler und/oder vertikaler Ebene sind nicht dargestellte, vorzugsweise als Hydraulikzylinder ausgeführte Stellmittel vorgesehen. Zur Bewegung der Laufradschwingen 3 in vertikaler Ebene sind die vorgesehenen Hydraulikzylinder mit einer ersten Seite über Verbindungsstellen 6 an den Laufradschwingen 3 angelenkt. Mit einer der ersten Seite gegenüberliegenden zweiten Seite sind die Hydraulikzylinder zur Bewegung der Laufradschwingen 3 am Rahmen der landwirtschaftlichen Maschine angelenkt. Beide Anlenkungen der Hydraulikzylinder zur Bewegung der Laufradschwingen 3 in vertikaler Ebene sind um eine in Fahrtrichtung F verlaufende Schwenkachse verschwenkbar sind. Auf diese Weise werden Relativbewegungen zwischen den Laufradschwingen 3 und dem Rahmen der landwirtschaftlichen Maschine durch eine Lage- und Längenänderung der Hydraulikzylinder zur Bewegung der Laurradschwingen 3 in vertikaler Ebene ausgeglichen.

Zur Bewegung der Laufradschwingen 3 in horizontaler Richtung sind Hydraulikzylinder jeweils zwischen dem Anlenkbereich 5 der Laufradschwingen 3 und am äußeren Ende der Querträger 4 angeordneten Verbindungsbauteilen 7 zur Verbindung der Querträger 4 mit dem Rahmen der landwirtschaftlichen Maschine vorgesehen.

Die Bewegung der Laufradschwinge 3 in horizontaler und/oder vertikaler Ebene ist für jede Laufradschwinge unabhängig. Dazu werden die jeweils notwendigen Hydraulikzylinder in geeigneter Weise angesteuert.

Zur Versorgung der Hydraulikzylinder mit Hydraulikflüssigkeit sind die Hydraulikzylinder sind mittels Hydraulikleitungen 8 mit einem zentralen Hydraulikverteiler 9 verbunden. Der zentrale Hydraulikverteiler 9 ist auf dem zentralen Fahrwerksbereich 1C angeordnet.

Der zentrale Fahrwerksbereich umfasst eine Bodenplatte 10 und/oder ein Rahmenteil, welche den vorderen Querträger 4A mit dem hinteren Querträger 4B möglichst verwindungsfest verbinden, die es in den Fig. 1 bis 3 dargestellt ist. Dabei stellt die Bodenplatte 10 und/oder das Rahmenteil einen Teil des Unterbodens der landwirtschaftlichen Maschine dar. Der Unterboden der landwirtschaftlichen Maschine ist zumindest annähernd hindernisfrei ausgeführt, sodass zu überfahrende Pflanzen nicht durch Kollision beispielsweise mit Bauteilkanten am Unterboden der landwirtschaftlichen Maschine beschädigt werden.

In alternativer Ausführung wird der zentrale Fahrwerksbereich 1C durch ein den vorderen Querträger 4A mit dem hinteren Querträger 4B möglichst verwindungsfest verbindendes Rahmenteil gebildet.

Auf dem Rahmenteil und/oder der Bodenplatte 10 ist der zentrale Hydraulikverteiler 9 befestigt. Aufgrund der zentralen Anordnung des zentralen Hydraulikverteilers 9 sind die jeweils zu den Hydraulikzylindern zur Bewegung der Laufradschwingen in vertikaler bzw. horizontaler Ebene führenden Hydraulikleitungen 8 in jeweils minimaler und zumindest annähernd gleicher Länge ausgeführt. Durch eine zumindest annähernd gleiche Länge der jeweiligen Hydraulikleitungen 8 werden in einfacher Weise zumindest annähernd gleiche Hydraulikdruckverhältnisse an den jeweiligen Hydraulikzylindern erreicht.s

Die Hydraulikleitungen 8 sind im Wesentlichen entlang der Laufradschwingen 3 bzw. der Querträger 4 geführt. Durch die Führung entlang der beweglichen Laufradschwingen 3 sind die Relativbewegungen zwischen den Hydraulikleitungen 8 und den beweglichen Laufradschwingen 3 reduziert. Somit ist die Gefahr reduziert, dass die Hydraulikleitungen 8 zwischen sich relativ zueinander bewegenden Teilen der Maschine eingeklemmt und/oder beschädigt werden.

Zur sicheren Führung und zur Vermeidung von Bewegungen der Hydraulikleitungen 8 relativ zu Teilen der landwirtschaftlichen Maschine ist eine Vielzahl Fixierungselemente 11, insbesondere im zentralen Fahrwerksbereich 1C, vorgesehen. Dadurch werden Relativbewegungen zwischen den Hydraulikleitungen 8 und Teilen der landwirtschaftlichen Maschine minimiert, welche wegen auftretender Reibung zu beschleunigtem Verschleiß der Hydraulikleitungen 8 führen.

In bevorzugter Weise werden Fixierungselemente 12 genutzt, um die mit dem zentralen Hydraulikverteiler 9 verbundenen Hydraulikleitungen 8 im Bereich ihres Anschlusses an der Bodenplatte 10 und/oder dem Rahmenteil zu fixieren. Dadurch wird die durch Bewegungen der Hydraulikleitungen 8 verursachte mechanische Belastung der Anschlüsse minimiert und somit Verschleiß und Beschädigungen des zentralen Hydraulikverteilers und/oder dessen Anschlüssen reduziert.

Auf die beschriebene Weise wird eine zentrale Hydraulikanordnung geschaffen. Der zentrale Hydraulikverteiler 9 ist auf einem zentralen, unbeweglichen Fahrwerksbereich 1C angeordnet. Diese Anordnung stellt ein stabiles Fahrwerk 1 mit Einzelradaufhängung sicher, bei welchem Hydraulikleitungen 8 minimaler Länge besonders verschleißarm geführt werden.

## Patentansprüche

1. Landwirtschaftliche Maschine, aufweisend einen Rahmen, welcher sich mittels eines Laufräder umfassenden Fahrwerks (1) auf dem Erdboden abstützt und über Verbindungsbauteile (7) mit dem Fahrwerk (1) verbunden ist, wobei das Fahrwerk (1) eine Einzelaufhängung (2) der Laufräder umfasst, und ein Hydrauliksystem mit einem zentralen Hydraulikverteiler (9) umfasst, **dadurch gekennzeichnet, dass** das Fahrwerk (1) einen zentralen, unbeweglichen mit dem Rahmen fest verbundenen Fahrwerksbereich (1C) aufweist und der zentrale Hydraulikverteiler (9) in dem zentralen, unbeweglichen Fahrwerksbereich (1C) angeordnet ist, dass der zentrale, unbewegliche Fahrwerksbereich (1C) den in Fahrtrichtung (F) vorderen Fahrwerksbereich (1A) mit dem in Fahrtrichtung hinteren Fahrwerksbereich (1B) verbindet.

2. Landwirtschaftliche Maschine nach Anspruch 1, **dadurch gekennzeichnet, dass** der zentrale, unbewegliche Fahrwerksbereich (1C) von einer Bodenplatte (10) und/oder einem Rahmenteil gebildet wird und zumindest einen Teil des Unterbodens des Fahrwerks (1) darstellt.

3. Landwirtschaftliche Maschine nach zumindest einem der vorangegangenen Ansprüche, wobei der zentrale Hydraulikverteiler (9) eine Vielzahl von Anschlüssen für Hydraulikleitungen (8) aufweist, **dadurch gekennzeichnet, dass** der zentrale, unbewegliche Fahrwerksbereich (1C) eine Vielzahl Fixierungselemente (11,12) aufweist, welche geeignet sind, Hydraulikleitungen (8) zu fixieren.

4. Landwirtschaftliche Maschine nach zumindest einem der vorangegangenen Ansprüche, **dadurch gekennzeichnet, dass** entlang des zentralen, unbeweglichen Fahrwerksbereichs (1C) geführte Hydraulikleitungen (8) mittels geeigneter Fixierungselemente (11) an dem zentralen, unbeweglichen Fahrwerksbereich (1C) fixiert sind.

5. Landwirtschaftliche Maschine nach zumindest einem der vorangegangenen Ansprüche, **dadurch gekennzeichnet, dass** mit den Anschlüssen des zentralen Hydraulikverteilers (9) verbundene Hydraulikleitungen (8) im Bereich ihres jeweiligen Anschlusses an dem zentralen, unbeweglichen Fahrwerksbereich (1C) fixiert sind.

6. Landwirtschaftliche Maschine nach zumindest einem der vorangegangenen Ansprüche, **dadurch gekennzeichnet, dass** der vordere und/oder der hintere Fahrwerksbereich jeweils zwei Laufradschwingen (3) umfasst, welche auf der in Fahrtrichtung (F) linken und rechten Seite der landwirtschaftlichen Maschine angeordnet sind, wobei jede Laufradschwinge (3) mit einem Laufrad verbunden ist.

7. Landwirtschaftliche Maschine nach zumindest einem der vorangegangenen Ansprüche, **dadurch gekennzeichnet, dass** die jeweils zwei Laufradschwingen (3) des vorderen und/oder hinteren Fahrwerksbereichs (1A,1B) an einem gemeinsamen quer zur Fahrtrichtung (F) angeordneten vorderen bzw. hinteren Querträger angelenkt (4A,4B) sind.

8. Landwirtschaftliche Maschine nach zumindest einem der vorangegangenen Ansprüche, **dadurch gekennzeichnet, dass** der zentrale, unbewegliche Fahrwerksbereich (1C) die beiden Querträger (4A,4B) verbindet.

9. Landwirtschaftliche Maschine nach zumindest einem der vorangegangenen Ansprüche, **dadurch gekennzeichnet, dass** der zentrale, unbewegliche Fahrwerksbereich (1C) die beiden Querträger (4A,4B) starr und verwindungsfest miteinander verbindet.

## Claims

1. Agricultural machine, having a frame which is supported on the ground by means of a chassis (1) comprising impellers and is connected to the chassis (1) via connecting components (7), wherein the chassis (1) comprises a single suspension (2) of the impellers, and comprises a hydraulic system having a central hydraulic distributor (9), **characterized in that** the chassis (1) has a central, immovable chassis region (1C) fixedly connected to the frame, and the central hydraulic distributor (9) is arranged in the central, immovable chassis region (1C), that the central, immovable chassis region (1C) connects the front - in the direction of travel (F) - chassis region (1A) to the rear - in the direction of travel - chassis region (1B).

2. Agricultural machine according to claim 1,
**characterized in that** the central, immovable chassis region (1C) is formed by a base plate (10) and/or a frame part and constitutes at least a part of the underbody of the chassis (1).

3. Agricultural machine according to at least one of the preceding claims, wherein the central hydraulic distributor (9) has a plurality of connectors for hydraulic lines (8), **characterized in that** the central, immovable chassis region (1C) has a plurality of fixing elements (11,12) suitable for affixing hydraulic lines (8).

4. Agricultural machine according to at least one of the preceding claims, **characterized in that** hydraulic lines (8) guided along the central, immovable chassis region (1C) are affixed to the central, immovable chassis region (1C) by means of suitable fixing elements (11).

5. Agricultural machine according to at least one of the preceding claims, **characterized in that** hydraulic lines (8) connected to the connectors of the central hydraulic distributor (9) are affixed in the region of their respective connector to the central, immovable chassis region (1C).

6. Agricultural machine according to at least one of the preceding claims, **characterized in that** the front and/or the rear chassis region in each case comprises two impeller rockers (3), which are arranged on the left and right sides - in the direction of travel (F) - of the agricultural machine, wherein each impeller rocker (3) is connected to an impeller.

7. Agricultural machine according to at least one of the preceding claims, **characterized in that** the two respective impeller rockers (3) of the front and/or rear chassis region (1A, 1B) are hinged (4A,4B) to a common front or rear crossmember arranged transversely to the direction of travel (F).

8. Agricultural machine according to at least one of the preceding claims, **characterized in that** the central, immovable chassis region (1C) connects the two cross-members (4A,4B).

9. Agricultural machine according to at least one of the preceding claims, **characterized in that** the central, immovable chassis region (1C) connects the two cross-members (4A,4B) to one another in a rigid and torsion-resistant manner.

## Revendications

1. Engin agricole, comportant un cadre, lequel s'appuie sur le sol au moyen d'un châssis (1) comprenant des roues et est relié au châssis (1) au moyen d'éléments de liaison (7), dans lequel le châssis (1) comprend une suspension individuelle (2) des roues et comprend un système hydraulique doté d'un distributeur hydraulique (9) central, **caractérisé en ce que** le châssis (1) comporte une zone de châssis (1C) centrale et immobile, reliée solidement au cadre et le distributeur hydraulique (9) central est disposé dans la zone de châssis (1C) centrale et immobile, que la zone de châssis (1C) centrale et immobile relie la zone de châssis (1A) avant dans le sens de la conduite (F) à la zone de châssis (1B) arrière dans le sens de la conduite.

2. Engin agricole selon la revendication 1,
**caractérisé en ce que** la zone de châssis (1C) centrale et immobile est formée d'une plaque de fond (10) et/ou d'une partie de cadre et représente au moins une partie du soubassement du châssis (1).

3. Engin agricole selon au moins l'une quelconque des revendications précédentes, dans lequel le distributeur hydraulique (9) central comporte plusieurs raccords pour des conduites hydrauliques (8), **caractérisé en ce que** la zone de châssis (1C) centrale et immobile comporte une pluralité d'éléments de fixation (11, 12), lesquels sont conçus pour fixer les conduites hydrauliques (8).

4. Engin agricole selon au moins l'une quelconque des revendications précédentes, **caractérisé en ce que** les conduites hydrauliques (8) guidées le long de la zone de châssis (1C) centrale et immobile sont fixées à la zone de châssis (1C) centrale et immobile au moyen des éléments de fixation (11) appropriés.

5. Engin agricole selon au moins l'une quelconque des revendications précédentes, **caractérisé en ce que** les conduites hydrauliques (8) reliées aux raccords du distributeur hydraulique (9) central sont fixées dans la zone de leur raccord respectif à la zone de châssis (1C) centrale et immobile.

6. Engin agricole selon au moins l'une quelconque des revendications précédentes, **caractérisé en ce que** la zone de châssis avant et/ou arrière comprend respectivement deux bras oscillants de roues (3), lesquels sont disposés sur les côtés gauche et droit de l'engin agricole dans le sens de conduite (F), dans lequel chaque bras oscillant de roue (3) est relié à une roue.

7. Engin agricole selon au moins l'une quelconque des revendications précédentes, **caractérisé en ce que** les deux bras oscillants de roues (3) respectifs de la zone de châssis (1A, 1B) avant et/ou arrière sont articulés sur des traverses (4A, 4B) avant ou arrière communes disposées transversalement au sens de conduite (F).

8. Engin agricole selon au moins l'une quelconque des revendications précédentes, **caractérisé en ce que** la zone de châssis (1C) centrale et immobile relie les deux traverses (4A, 4B).

9. Engin agricole selon au moins l'une quelconque des revendications précédentes, **caractérisé en ce que** la zone de châssis (1C) centrale et immobile relie les deux traverses (4A, 4B) l'une à l'autre de manière rigide et résistante à la torsion.
